# EUROPEAN PATENT APPLICATION

(11) **EP 4 141 600 A1**
(43) Date of publication of application: **01.03.2023**
(21) Application number: 21814321.2
(22) Date of filing: 26.01.2021
(51) Int. Cl.: G05D 1/02, H04W 4/02, G01C 21/16, G01C 21/30

(54) **POSITIONING METHOD AND POSITIONING APPARATUS**

(30) Priority: 25.05.2020 CN 202010452141
(71) Applicant: Huawei Technologies Co., Ltd., Shenzhen, Guangdong 518129 (CN)
(72) Inventor: LI, Jianfei, Shenzhen, Guangdong 518129 (CN); YE, Aixue, Shenzhen, Guangdong 518129 (CN); GAO, Yajun, Shenzhen, Guangdong 518129 (CN); WEN, Feng, Shenzhen, Guangdong 518129 (CN)
(74) Representative: Grünecker Patent- und Rechtsanwälte PartG mbB
(86) International application number: PCT/CN2021/073709
(87) International publication number: WO 2021/238283

(57) **Abstract**

A positioning method is provided, which relates to the positioning field and is applied to target positioning in a spatially overlapping scenario. This can avoid a positioning error in the spatially overlapping scenario. The method includes: constructing a local topology map of a target at a current moment based on identifiers of segments and a connection relationship between segments, wherein the identifiers of the segments and the connection relationship are prestored in map information; and determining, by using the local topology map, a specific road segment in which a target located in a spatially overlapping region is located at a next moment. In addition, a positioning map linked with a road segment may be further stored in the map information, and a positioning map linked with a positioned road segment is determined based on the positioned road segment, to implement high-precision positioning.

## Description

This application claims priority to Chinese Patent Application No. 202010452141.2, filed with the China National Intellectual Property Administration on May 25, 2020 and entitled "POSITIONING METHOD AND APPARATUS", which is incorporated herein by reference in its entirety.

### TECHNICAL FIELD

This application relates to the field of map navigation technologies, and in particular, to a positioning method and apparatus.

### BACKGROUND

In recent years, technical research on autonomous driving has attracted increasingly more attention. Currently, a mainstream technical solution of autonomous driving is that high-precision positioning cooperates with a high-precision map.

Positioning is an indispensable technical procedure in autonomous driving. A common positioning method is to receive a global navigation satellite system (global navigation satellite system, GNSS) signal by using a GNSS receiver of a vehicle, to obtain location information of the vehicle and determine a vehicle location on a map.

For a scenario in which space overlaps in a height direction, such as a scenario in which an urban elevated bridge overlaps a ground-level road or a multi-layer parking lot scenario, because overlapping roads have same or similar longitude and latitude, it is difficult to specifically determine a specific layer, on the overlapping roads, at which the vehicle is located, and consequently, a positioning error occurs.

Therefore, there is a need for a solution in which accurate positioning can be implemented in a scenario with overlapping in the height direction.

### SUMMARY

A positioning method provided in embodiments of this application can implement precise positioning in a spatially overlapping scenario, and avoid a positioning error.

A first aspect of embodiments of this application provides a positioning method. The positioning method includes: determining an identifier of a first road segment in which a target is located at a first moment; constructing a local topology map of the first moment based on map information, where the local topology map of the first moment includes an identifier of a road segment adjacent to the first road segment; obtaining location information of the target at a second moment, where the second moment is a moment after the first moment in a time sequence; determining, based on the map information and the location information of the target at the second moment, identifiers of at least two road segments corresponding to the target at the second moment; and determining, based on the local topology map of the first moment and the identifiers of the at least two road segments corresponding to the target at the second moment, an identifier of a road segment in which the target is located at the second moment.

The positioning method provided in this embodiment of this application can implement positioning in a spatially overlapping scenario, and avoid a positioning error. The method includes: constructing the local topology map of the target at the first moment based on pre-stored map information by using the identifier of the first road segment in which the target is located at the first moment. Because identifiers of road segments adjacent to the first road segment are recorded in the local topology map, and there are no identifiers of a plurality of road segments in a spatially overlapping region in these identifiers, a quantity of identifiers of road segments corresponding to a location of the target at the second moment is determined based on the map information at the second moment. If the location of the target at the second moment corresponds to identifiers of at least two road segments, it indicates that the target is in the spatially overlapping region. The local topology map of the first moment is queried, and a specific road segment in which the target in the spatially overlapping region is located at the second moment may be determined based on the identifiers that are of the road segments and that are included in the local topology map, to position a second location of a specific road segment in which the target is located. In this method, a specific road segment that is in a plurality of road segments overlapping in a height direction and in which the target is located can be determined, so that a positioning error is avoided. In addition, an identifier of a positioning map layer linked with a road segment may be further stored in the map information. A positioning map layer linked with a positioned road segment is determined based on the road segment, and high-precision positioning on the target is implemented by using the positioning map layer.

In a possible implementation of the first aspect, the map information includes identifiers of road segments and a connection relationship between road segments.

According to the positioning method provided in this embodiment of this application, the map information includes the identifiers of the road segments and the connection relationship between road segments, so that an identifier of a road segment adjacent to the road segment may be queried based on the identifier of the road segment, to construct the local topology map.

In a possible implementation of the first aspect, the method further includes: obtaining a navigation satellite system signal of the target at an initial moment; determining location information of the target at the initial moment based on the navigation satellite system signal; and determining, based on the map information and the location information of the target at the initial moment, an identifier of a road segment in which the target is located at the initial moment.

In the positioning method provided in this embodiment of this application, a scenario in which the target is in a non-spatially overlapping region at the initial moment is described. At the initial moment after a positioning apparatus is enabled, because the local topology map has not been constructed, an initial location of the target and the identifier of the road segment in which the target is located may be determined by using a GNSS signal.

In a possible implementation of the first aspect, the method further includes: obtaining a navigation satellite system signal of the target at an initial moment; determining location information of the target at the initial moment based on the navigation satellite system signal; determining, based on the map information, that the location information of the target at the initial moment corresponds to identifiers of at least two road segments; and determining, based on laser point cloud data at the initial moment by performing matching with laser point cloud data in a pre-constructed positioning map layer, an identifier of a road segment in which the target is located at the initial moment.

According to the positioning method provided in this embodiment of this application, the identifier of the road segment in which the target is located is determined in a scenario in which the target is in a spatially overlapping road segment at the initial moment. In other words, a vehicle-mounted laser device obtains scenario information around the target, and performs matching with a scenario in the pre-constructed positioning map layer, to determine the identifier of the road segment in which the target is located at the initial moment.

In a possible implementation of the first aspect, the second moment is determined based on the first moment and a preset positioning frequency. For example, if the second moment is a next moment immediately next to the first moment, the second moment may be obtained by adding duration of a reciprocal of the preset positioning frequency to the first moment.

According to the positioning method provided in this embodiment of this application, the target may be continuously positioned based on the preset positioning frequency. For example, the GNSS signal is periodically obtained, and a frequency at which the GNSS signal is obtained is adjusted based on a current vehicle speed. It may be understood that the positioning frequency is generally relatively high, and is generally 5 Hz (hertz) to 20 Hz. For example, if the positioning frequency is 10 Hz and the vehicle speed is 60 km/h, a traveling interval between two times of positioning of the target is approximately 1.67 meters, and generally, a case in which positioning is not performed in a traveling process in an entire road segment does not occur.

In a possible implementation of the first aspect, the method further includes: constructing a local topology map of the second moment based on an identifier of a second road segment and the map information, where the local topology map of the second moment includes an identifier of a road segment adjacent to the second road segment.

According to the positioning method provided in this embodiment of this application, after determining the second road segment in which the target is located, the positioning apparatus may further update the local topology map based on the map information. Therefore, at a next positioning moment, positioning may continue to be performed based on the updated local topology map, and in particular, positioning of a road segment in the spatially overlapping region is implemented.

In a possible implementation of the first aspect, the method further includes: determining location information of the target at a third moment, where the third moment is a moment after the second moment in the time sequence; determining, based on the map information and the location information of the target at the third moment, identifiers of at least two road segments corresponding to the target at the third moment; and determining, based on the local topology map of the second moment and the identifiers of the at least two road segments, the identifier of the road segment in which the target is located at the second moment.

According to the positioning method provided in this embodiment of this application, the positioning apparatus may assist in positioning at each positioning moment based on a local topology map constructed at a previous moment.

In a possible implementation of the first aspect, the method further includes: determining, based on the map information, an identifier of a positioning map layer linked with the identifier of the second road segment, where the map information includes an identifier of a positioning map layer linked with an identifier of a road segment; determining, based on the identifier of the positioning map layer, the positioning map layer linked with the identifier of the second road segment; and determining accurate location information of the target at the second moment based on the positioning map layer linked with the identifier of the second road segment, where precision of the accurate location information of the target at the second moment is higher than that of the location information of the target at the second moment.

According to the positioning method provided in this embodiment of this application, the positioning apparatus stores a positioning map layer pre-constructed for each road segment. After obtaining a road segment in which the target is located, the positioning apparatus may determine a current positioning map layer based on a linking relationship between an identifier of a road segment and an identifier of a positioning map layer, and further, may accurately position the target based on the positioning map layer and real-time data that is obtained by a sensor. Precision of positioning data obtained based on the positioning map layer is higher than that of positioning data obtained by using the GNSS signal.

In a possible implementation of the first aspect, the method further includes: displaying information about the second road segment on a display interface of a mobile phone; and/or broadcasting the information about the second road segment through speech by using the mobile phone.

According to the positioning method provided in this embodiment of this application, the positioning apparatus may be a mobile phone, and the method further includes: displaying information about the second road segment on a display interface of the mobile phone, and/or broadcasting the information about the second road segment through speech. If a user is prompted by using such a method, a route error can be avoided.

In a possible implementation of the first aspect, the method further includes: displaying information about the second road segment on a display interface of a vehicle-mounted terminal; and/or broadcasting the information about the second road segment through speech by using the vehicle-mounted terminal.

According to the positioning method provided in this embodiment of this application, the positioning apparatus may be a vehicle-mounted terminal, and the method further includes: displaying information about the second road segment on a display interface of the vehicle-mounted terminal, and/or broadcasting the information about the second road segment through speech. If a user is prompted by using such a method, a route error can be avoided.

A second aspect of embodiments of this application provides a positioning apparatus. The positioning apparatus includes: a determining unit, configured to determine an identifier of a first road segment in which a target is located at a first moment; and a processing unit, configured to construct a local topology map of the first moment based on map information, where the local topology map of the first moment includes an identifier of a road segment adjacent to the first road segment. The determining unit is further configured to obtain location information of the target at a second moment, where the second moment is a moment after the first moment in a time sequence. The determining unit is further configured to determine, based on the map information and the location information of the target at the second moment, identifiers of at least two road segments corresponding to the target at the second moment. The determining unit is further configured to determine, based on the local topology map of the first moment and the identifiers of the at least two road segments corresponding to the target at the second moment, an identifier of a road segment in which the target is located at the second moment.

In a possible implementation of the second aspect, the map information includes identifiers of road segments and a connection relationship between road segments.

In a possible implementation of the second aspect, the apparatus further includes: an obtaining unit, configured to obtain a navigation satellite system signal of the target at an initial moment. The determining unit is further configured to determine location information of the target at the initial moment based on the navigation satellite system signal. The determining unit is further configured to determine, based on the map information and the location information of the target at the initial moment, an identifier of a road segment in which the target is located at the initial moment.

In a possible implementation of the second aspect, the apparatus further includes: an obtaining unit, configured to obtain a navigation satellite system signal of the target at an initial moment. The determining unit is further configured to determine location information of the target at the initial moment based on the navigation satellite system signal. The determining unit is further configured to determine, based on the map information, that the location information of the target at the initial moment corresponds to identifiers of at least two road segments. The determining unit is further configured to determine, based on laser point cloud data at the initial moment by performing matching with laser point cloud data in a pre-constructed positioning map layer, an identifier of a road segment in which the target is located at the initial moment.

In a possible implementation of the second aspect, the second moment is determined based on the first moment and a preset positioning frequency.

In a possible implementation of the second aspect, the processing unit is further configured to construct a local topology map of the second moment based on an identifier of a second road segment and the map information, where the local topology map of the second moment includes an identifier of a road segment adjacent to the second road segment.

In a possible implementation of the second aspect, the determining unit is further configured to: determine location information of the target at a third moment, where the third moment is a moment after the second moment in the time sequence; determine, based on the map information and the location information of the target at the third moment, identifiers of at least two road segments corresponding to the target at the third moment; and determine, based on the local topology map of the second moment and the identifiers of the at least two road segments, the identifier of the road segment in which the target is located at the second moment.

In a possible implementation of the second aspect, the determining unit is further configured to: determine, based on the map information, an identifier of a positioning map layer linked with the identifier of the second road segment, where the map information includes an identifier of a positioning map layer linked with an identifier of a road segment; determine, based on the identifier of the positioning map layer, the positioning map layer linked with the identifier of the second road segment; and determine accurate location information of the target at the second moment based on the positioning map layer linked with the identifier of the second road segment, where precision of the accurate location information of the target at the second moment is higher than that of the location information of the target at the second moment.

In a possible implementation of the second aspect, the apparatus further includes: a display unit, configured to display information about the second road segment on a display interface of a mobile phone; and/or a playback unit, configured to broadcast the information about the second road segment through speech by using the mobile phone.

In a possible implementation of the second aspect, the apparatus further includes: a display unit, configured to display information about the second road segment on a display interface of a vehicle-mounted terminal; and/or a playback unit, configured to broadcast the information about the second road segment through speech by using the vehicle-mounted terminal.

A third aspect of embodiments of this application provides a positioning apparatus, including a processor and a memory. The processor and the memory are connected to each other, the memory is configured to store a computer program, the computer program includes program instructions, and the processor is configured to invoke the program instructions to perform the positioning method in the first aspect or any possible implementation of the first aspect.

A fourth aspect of embodiments of this application provides a computer-readable storage medium. The computer-readable storage medium stores instructions, and when the instructions are run on a computer, the computer is enabled to perform the positioning method in the first aspect or any possible implementation of the first aspect.

A fifth aspect of embodiments of this application provides a computer program product that includes instructions. When the computer program product is run on a computer, the computer is enabled to perform the positioning method in the first aspect or any possible implementation of the first aspect.

A sixth aspect of embodiments of this application provides a chip system. The chip system includes a processor, configured to support an execution function network element in implementing functions involved in the positioning method in the first aspect or any possible implementation of the first aspect. In a possible design, the chip system further includes a memory, and the memory is configured to store a program instruction and data that are necessary for the execution function network element. The chip system may include a chip, or may include a chip and another discrete component.

A seventh aspect of embodiments of this application provides an intelligent vehicle system, including the positioning apparatus in the second aspect or any possible implementation of the second aspect.

For technical effects brought by any implementation in the second aspect, the third aspect, the fourth aspect, the fifth aspect, the sixth aspect, or the seventh aspect, refer to technical effects brought by a corresponding implementation of the first aspect. Details are not described herein again.

According to the positioning method provided in embodiments of this application, the local topology map of the first moment is constructed by using the map information and the first road segment in which the target is located at the first moment, and all road segments adjacent to the first road segment are determined. At the second moment after the first moment, positioning is assisted based on the local topology map, and for a scenario in which the target is in the spatially overlapping region at the second moment, the road segment in which the target is located can be accurately positioned based on the local topology map.

In the positioning method provided in embodiments of this application, a road segment may be further linked with a positioning map layer by using the map information, and a continuity relationship of road segments in the constructed local topology map is used to avoid a positioning error caused when an incorrect positioning map layer is loaded in the spatially overlapping region. On a compliance premise, a problem of positioning map layer loading in the spatially overlapping scenario is resolved by using the linking relationship between a road segment ID and a positioning map layer, and the target can be accurately positioned based on a correct positioning map layer.

### BRIEF DESCRIPTION OF DRAWINGS

FIG. 1 is a schematic diagram of a spatially overlapping scenario according to an embodiment of this application;
FIG. 2 is a schematic diagram of an embodiment of road segment information in map information;
FIG. 3 is a schematic diagram of a positioning method according to an embodiment of this application;
FIG. 4 is a schematic diagram of an embodiment of a local topology map according to an embodiment of this application;
FIG. 5 is a schematic diagram of an embodiment of a positioning method according to an embodiment of this application;
FIG. 6 is a schematic diagram of an embodiment of a positioning method in a spatially overlapping scenario according to an embodiment of this application;
FIG. 7 is a schematic diagram of a local topology map in a vehicle traveling process according to an embodiment of this application;
FIG. 8 is a schematic diagram of another embodiment of a positioning method in a spatially overlapping scenario according to an embodiment of this application;
FIG. 9 is a schematic diagram of an embodiment of a positioning apparatus according to an embodiment of this application; and
FIG. 10 is a schematic diagram of another embodiment of a positioning apparatus according to an embodiment of this application.

### DESCRIPTION OF EMBODIMENTS

Embodiments of this application provide a positioning method and apparatus, to implement positioning in a spatially overlapping scenario, and avoid a positioning error.

The following describes embodiments of this application with reference to the accompanying drawings.

The term "and/or" in this application is merely an association relationship that describes associated objects, and represents that there may be three relationships. For example, A and/or B may represent three cases: only A exists, both A and B exist, and only B exists. A and B may be singular numbers or plural numbers. In addition, the character "/" in this application generally indicates an "or" relationship between the associated objects. In this application, "at least one" means one or more, and "a plurality of" means two or more. "At least one of the following items (pieces)" or a similar expression thereof is any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "comprise" and any other variants mean to cover the non-exclusive inclusion, so that a process, method, system, product, or device that includes a series of units is not necessarily limited to those units, but may include other units not expressly listed or inherent to such a process, method, system, product, or device.

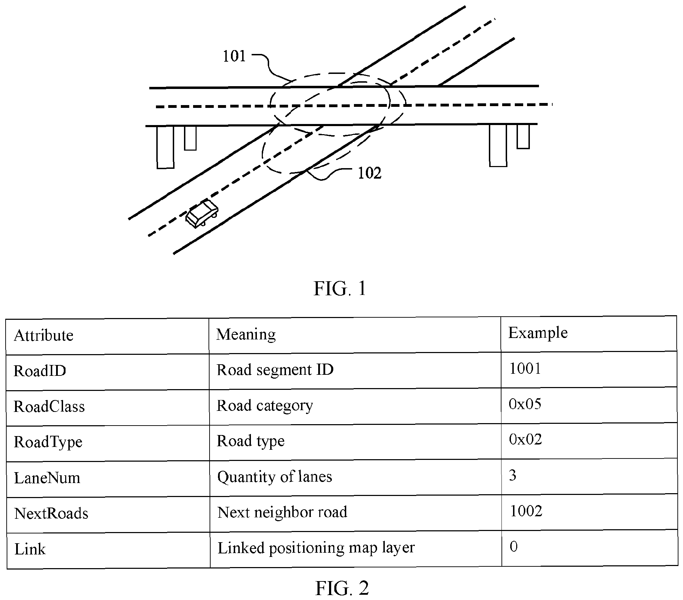

For ease of understanding, some technical terms involved in embodiments of this application are briefly described below.
1. Map: There are a common navigation map and a high-precision map. The common navigation map may be used for navigation or searching, and includes a road, an information point, an administrative region boundary, and the like, and is map data used by a human driver. According to a positioning method provided in embodiments of this application, map information needs to include identifiers of road segments and a connection relationship between road segments. The high-precision map is machine-oriented map data to be used by an autonomous driving vehicle, has higher precision than the common map, and may be used for high-precision positioning, navigation, route planning, and the like. The high-precision map needs to meet lane-level autonomous driving navigation, and includes identifiers of road segments and a connection relationship between road segments, and may further include road detail information, such as a lane line, a lane center line, and mathematical parameters such as curvature, a gradient, a direction, and a cross slope of a road, so that a road shape can be truly reflected.
2. Positioning map layer: The positioning map layer is prior data used for positioning, generally includes a road and environment information around the road, and may be used for precise positioning of a vehicle. There are a plurality of types of positioning map layers. For different sensors, a positioning map layer is constructed in different manners, and map layer data used for positioning in the positioning map layer includes content of a same type as information that can be perceived by a used sensor. Generally, for example, a laser positioning map layer includes point cloud information of an ambient environment, and a vector positioning map layer includes vector element information used for positioning in the environment. The laser positioning map layer is obtained by surveying and mapping a road and road surroundings by using a sensor such as a laser radar. A specific type of the positioning map layer involved in embodiments of this application is not limited.
3. Spatially overlapping: Spatially overlapping is also referred to as elevation overlapping or multi-layer overlapping. In a traveling process, a vehicle often encounters a spatially overlapping scenario. The spatially overlapping scenario means that if two roads have consistent longitude and latitude (in other words, the two roads have same or similar x and same or similar y in a location coordinate system (x, y, z)) and inconsistent elevations (in other words, values of z are different), the two roads overlap in a height direction. An elevated road is an example of a common spatially overlapping scenario. The elevated road entirely or partially overlaps a ground-level road in longitude and latitude planes. In addition, there may also be a scenario in which a plurality of layers of roads overlap, for example, a ground-level road, a first-layer elevated road above the ground-level road, and a second-layer elevated road above the first-layer elevated road. FIG. 1 is a schematic diagram of a spatially overlapping scenario according to an embodiment of this application. In FIG. 1, a region 101 of an elevated road and a region 102 of a ground-level road are spatially overlapping regions.

For a multi-layer road with spatially overlapping, roads at different layers correspond to different positioning map layers. For example, a positioning map layer corresponding to a ground layer includes ground-level road information, and does not include road information of an elevated road segment. A laser positioning map layer is used as an example. The laser positioning map layer includes point cloud information of an ambient environment, a laser positioning map layer corresponding to a ground-level road includes information about the ground-level road and surroundings, such as information about a bridge pillar under an elevated bridge, and a laser positioning map layer corresponding to an elevated bridge road does not include the information about the bridge pillar.

When an autonomous driving vehicle passes through the foregoing road segment, if there is no elevation positioning function, the autonomous driving vehicle cannot distinguish whether a current location is on an elevated road or the ground-level road. If an incorrect positioning map layer is loaded, a positioning error occurs.

4. Road segment: Start and end points of a road segment in embodiments of this application, include a road intersection, and include a planar intersection such as a crossroad, a T-junction, a Y-junction, or a planar circular intersection, and a three-dimensional intersection such as an interchange three-dimensional intersection and a separated three-dimensional intersection. It can be learned that the road segment is a road region that is on a road and that is not affected by interleaving, offloading, and combining. A road usually includes a plurality of road segments. Although a plurality of road segments belong to a same road, each road segment has a different road segment ID, and each road segment has a unique corresponding road segment ID. Different road segments may be distinguished based on road segment IDs. It should be noted that, for a separated intersection, for example, in the scenario shown in FIG. 1, although the elevated road and the ground-level road are not on a same plane, there is spatially overlapping. As viewed in a height direction, a boundary of an overlapping region may also belong to the intersection, that is, may be used as start and end points of a road segment.

To implement a positioning method in a spatially overlapping scenario in embodiments of this application, map information needs to be obtained in advance. The map information includes identifiers of road segments and a connection relationship between road segments. Specifically, the map information may be high-precision map information. As an example for description in this embodiment and the following embodiments, the map information is high-precision map information. Optionally, an existing high-precision map may be directly downloaded, or a high-precision map may be constructed. In this embodiment of this application, a road segment identifier (ID) is set in the high-precision map for a road segment. It should be noted that a road may include one or more lanes. A minimum granularity of road identifier information in the high-precision map may be a road segment on the entire road, a quantity of lanes in the road segment on the entire road is the same as a quantity of lanes on the road, there may be one or more lanes, and a corresponding road segment ID is a road ID. Alternatively, the minimum granularity of the road identifier information in the high-precision map may be a road segment in a single lane on the road, the road segment in the single lane includes only one lane, and a corresponding road segment ID is a lane ID. As an example for description, the road segment involved in embodiments of this application is accurate to a road segment on the entire road. Optionally, the high-precision map further includes a link parameter of the road segment, and the link parameter is an identifier of a positioning map layer corresponding to the road segment. Optionally, a database of the positioning apparatus further includes a pre-constructed positioning map layer of each road segment. Once a road segment in which a to-be-positioned target is located is determined, a positioning map layer corresponding to the road segment is determined based on the link parameter, so that the corresponding positioning map layer may be loaded to implement accurate positioning of the target.

5. GNSS: A global navigation satellite system includes a global positioning system (global positioning system, GPS), a BeiDou navigation satellite system (BeiDou navigation satellite system, BDS for short), a GLONASS (GLONASS) navigation system, a Galileo satellite navigation system (Galileo satellite navigation system, Galileo), and the like. A specific type of the GNSS is not limited in embodiments of this application.

FIG. 2 is a schematic diagram of an embodiment of road segment information in map information. The road segment information stored in the map information includes a road segment ID, a road category, a road type, a quantity of lanes, an adjacent road, a linked positioning map layer, and the like. In this embodiment of this application, specific content included in the road segment information in the map information is not limited.

Because the map information includes information about a road segment ID and a linked positioning map layer, after the road segment ID is determined, a positioning map layer corresponding to the road segment ID may be associated based on the linking relationship, to implement accurate positioning of a target.

A positioning method provided in embodiments of this application may be used for positioning of an autonomous driving vehicle, positioning of a normal vehicle, or the like. This is not specifically limited herein.

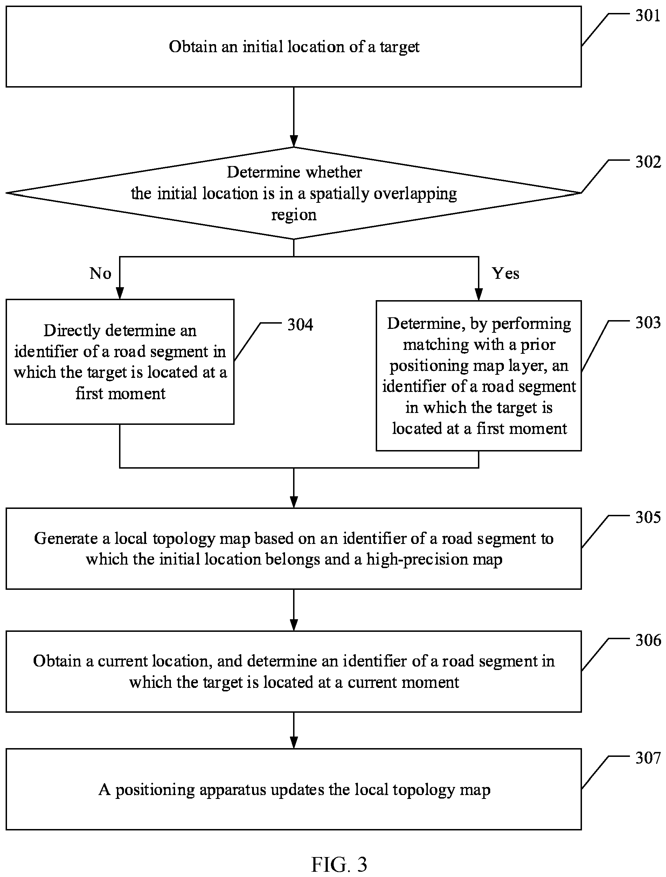

FIG. 3 is a schematic diagram of a positioning method according to an embodiment of this application.

301: Obtain an initial location of a target.

After a positioning apparatus is enabled, an initial location of a vehicle may be determined by receiving a GNSS signal, that is, a current location (x1, y1) that is when the positioning apparatus is enabled. For ease of description, it is assumed that a moment at which the initial location is obtained is a first moment. The positioning apparatus may obtain map information near the initial location based on the location position. Optionally, the positioning apparatus may further obtain yaw information (yaw) of the target. This is not specifically limited herein.

302: Determine whether the initial location is in a spatially overlapping region; and if yes, perform step 303, or if no, perform step 304.

The positioning apparatus may determine, by using the map information, whether the initial location of the target is in the spatially overlapping region. Specifically, if the current location (x1, y1) corresponds to two or more road segment IDs in a map, it indicates that the initial location of the target is in the spatially overlapping region, and step 303 is performed; or if the current location (x1, y1) corresponds to one road segment ID in the map, it indicates that the initial location is in a non-spatially overlapping region, and step 304 is performed.

303: Determine, by performing matching with a prior positioning map layer, an identifier of a road segment in which the target is located at the first moment.

If the current location (x1, y1) corresponds to two or more road segment IDs in the map, it indicates that the initial location of the target is in the spatially overlapping region; in other words, at least two road segments overlap in a height direction at such latitude and longitude. When the initial location is in the spatially overlapping region, the positioning apparatus separately performs matching with different map layers based on a positioning method of the prior positioning map layer to determine a current positioning map layer. A road segment linked with a successfully matched positioning map layer is a road segment in which the target is located at an initial moment. An identifier of the road segment is determined based on an identifier of the matched positioning map layer. There are a plurality of positioning methods based on the prior positioning map layer, such as laser positioning or vector map-based positioning. Optionally, a laser positioning method includes: for the spatially overlapping region, pre-constructing a prior positioning map layer of a scenario of each layer of road by using a laser radar; during positioning, obtaining road scenario information around the initial location by using a vehicle-mounted laser device; separately performing matching with the pre-constructed positioning map layer; and if matching with a specific layer in a multi-layer road scenario succeeds, loading a corresponding positioning map layer for positioning. For example, when the vehicle is on a ground-level road, a corresponding positioning map layer of the ground-level road is obtained; and when the vehicle is on an elevated road, a positioning map layer of the elevated road is obtained.

304: Directly determine an identifier of a road segment in which the target is located at the first moment.

When the initial location is in the non-spatially overlapping region, a positioning module may query a high-precision map based on the initial location (x1, y1), to directly determine an identifier of a road segment in which the vehicle is located.

Optionally, in this case, the positioning module queries the high-precision map based on the initial location (x1, y1). Because the initial location (x1, y1) is in the non-spatially overlapping region, a road segment ID of a road segment to which the initial location belongs may be uniquely determined. In addition, a link value corresponding to the road segment ID may be obtained based on the road segment ID, so that a positioning map layer linked with the initial location can be directly determined, to accurately position the initial location.

305: Generate a local topology map based on the identifier of the road segment to which the initial location belongs and the high-precision map.

The method includes: after determining the road segment to which the initial location belongs in step 303 or step 304, querying, in the high-precision map based on the road segment ID, a road segment ID of a road segment adjacent to the road segment, to construct the local topology map of the first moment.

The local topology map includes road segment IDs of all road segments adjacent to the initial location. The local topology map may indicate all other road segments accessible from a current road segment.

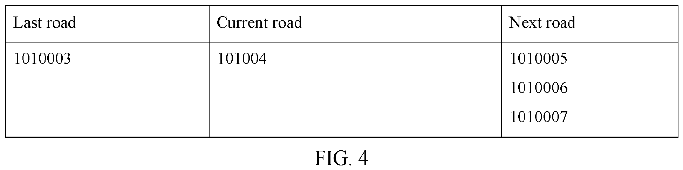

FIG. 4 is a schematic diagram of an embodiment of a local topology map according to an embodiment of this application. As shown in the figure, a road to which the current location belongs is "Current road" in the local topology map. "Next road" is queried based on information in the high-precision map, that is, a road segment that is directly accessible from the current location, and road segment IDs of all road segments that are directly accessible from the current location are saved in a data table of the local topology map. Optionally, if the positioning apparatus records a road segment that the vehicle passes most recently before the first moment, the positioning apparatus may record the road segment in the data table of the local topology map as "Last road".

306: Obtain a current location, and determine an identifier of a road segment in which the target is located at a current moment.

In a vehicle traveling process, the positioning apparatus may determine a current location of the vehicle by using a GNSS signal. A frequency at which the positioning apparatus obtains the GNSS signal may be preset. For example, the positioning apparatus obtains the GNSS signal based on a preset time interval or with reference to a vehicle speed at the current moment, and a higher vehicle speed leads to a higher frequency of obtaining the GNSS signal. A positioning frequency of the vehicle is not specifically limited herein. It may be understood that the positioning frequency of the vehicle is usually relatively high, and is generally 5 Hz to 20 Hz, for example, 10 Hz. In this embodiment, a specific positioning frequency of the positioning apparatus is not limited. The positioning frequency can ensure that the vehicle is positioned when passing through each road segment region in a traveling process.

At a second moment after the first moment, the positioning apparatus obtains a current real-time location (x2, y2), and may determine, by querying the high-precision map, whether the current location is in a spatially overlapping region. If the current location is not in the spatially overlapping region, a road segment ID corresponding to the current location may be directly provided based on the high-precision map. If the current location is in the spatially overlapping region, the local topology map is queried to determine a road segment ID of a road segment in which the current location is located. Optionally, if the current location (x2, y2) corresponds to a unique road segment ID in the high-precision map, the location is not in the spatially overlapping region. If the current location (x2, y2) corresponds to two or more road segment IDs in the high-precision map, the location is in the spatially overlapping region, and a specific road segment in which the vehicle is located needs to be determined by querying the local topology map.

The local topology map includes a road segment ID of a road segment in which the vehicle is located at the first moment and road segment IDs of all road segments adjacent to the road segment, and queries a road segment ID list (next road) of the road segments adjacent to the road segment, to determine a road segment ID that is in the road segment ID list and that is of a road segment covering the current location (x2, y2).

It should be noted that, in some possible implementations, in the spatially overlapping scenario involved in this embodiment of this application, a scenario in which one road segment is directly adjacent to a plurality of road segments at different layers in the spatially overlapping region is not considered, for example, a scenario in which an elevator is directly accessible to different parking floors. Therefore, in a road segment ID list of "next road" in the local topology map, a plurality of layers of road segments corresponding to a same spatially overlapping region do not exist in road segments corresponding to all road segment IDs. Based on this premise, when the current location (x2, y2) at the second moment is in the spatially overlapping region, the location (x2, y2) corresponds to at least two road segment IDs in the high-precision map, and only one of the at least two road segment IDs may be in the road segment ID list of "next road" in the local topology map at the first moment, and there is no case in which two or more road segment IDs are located in the road segment ID list of "next road" in the local topology map at the first moment.

Therefore, the road segment ID corresponding to the current location (x2, y2) at the second moment in the high-precision map is queried, and a road segment ID of a unique road segment in which the second moment is located may be determined based on the road segment ID list of "next road" in the local topology map at the first moment. A specific layer of road segment that is in the spatially overlapping region and in which the vehicle is located may be determined based on the road segment ID, so that information in a height direction is determined.

Optionally, because precision of the location (x2, y2) positioned based on the GNSS signal is relatively low, in a scenario in which a requirement for precision of a vehicle location is relatively high, a positioning map layer may be determined based on the road segment ID to further obtain current high-precision location information of the vehicle. Specifically, a linked positioning map layer may be determined based on the road segment ID and a link value corresponding to the road segment ID, and the positioning apparatus loads the corresponding positioning map layer. If the positioning map layer is a laser positioning map layer, laser point cloud information around the road segment is obtained based on a vehicle-mounted laser device, and matching is performed with a pre-constructed positioning map layer, to obtain an accurate location of the vehicle.

The positioning apparatus outputs information about the road segment ID and the current location positioned by using the GNSS signal, or may output a current high-precision horizontal coordinate and information about the road segment ID based on information about a current sensor and matching information of the positioning map layer.

307: The positioning apparatus updates the local topology map.

After the road segment in which the vehicle is located at the second moment is determined in step 305, the local topology map may be updated by querying a road segment ID of a road segment adjacent to the road segment in the high-precision map based on the road segment ID; in other words, a local topology map of the second moment is constructed.

The local topology map of the second moment includes road segment IDs of all road segments adjacent to the road segment in which the vehicle is located at the second moment. The local topology map may indicate all other segments accessible from the road segment in which the vehicle is located at the second moment.

Optionally, the positioning apparatus may repeatedly perform positioning based on a preset query rule, and repeatedly perform step 305 and step 306. For example, at a third moment, a current location (x3, y3) is obtained, and a road segment in which the target is located at the third moment may be determined based on the local topology map of the second moment and (x3, y3). If the road segment in which the target is located changes, the local topology map is maintained based on information that is about an adjacent road segment and that is queried in the high-precision map. A road segment ID of a road segment adjacent to the current positioned road segment is queried in the high-precision map based on the road segment ID of the road segment. If the ID of the current road segment changes, the local topology map is updated, a road segment ID of a passed road is deleted, and the road segment ID of the current road segment and the road segment ID of the road segment adjacent to the current road segment are updated. Similarly, the positioning apparatus may continuously obtain updated location information, continuously maintain the local topology map, and continuously obtain the road segment in which the target is located. Details are not described herein. Optionally, the local topology map further includes a road segment ID (current road) of a current road and a road segment ID (last road) of a last road segment.

According to the positioning method provided in this embodiment of this application, the positioning apparatus constructs a local topology map of the vehicle at the current moment based on road segment information pre-stored in the high-precision map, and determines, by using the local topology map and location information at a next moment, a specific road segment in which the vehicle in the spatially overlapping region is located. In addition, the link parameter may be further stored in the high-precision map to indicate the positioning map layer linked with the road segment. In this way, the positioning map layer linked with the road segment may be determined in the spatially overlapping region based on the road segment ID, and accurate positioning is implemented in the spatially overlapping region based on a correct positioning map layer.

When a positioning map layer is directly matched based on road scenario information obtained by a laser device to perform positioning, positioning accuracy for similar scenarios is low. In this application, similar scenarios can be better distinguished by using a topology correlation.

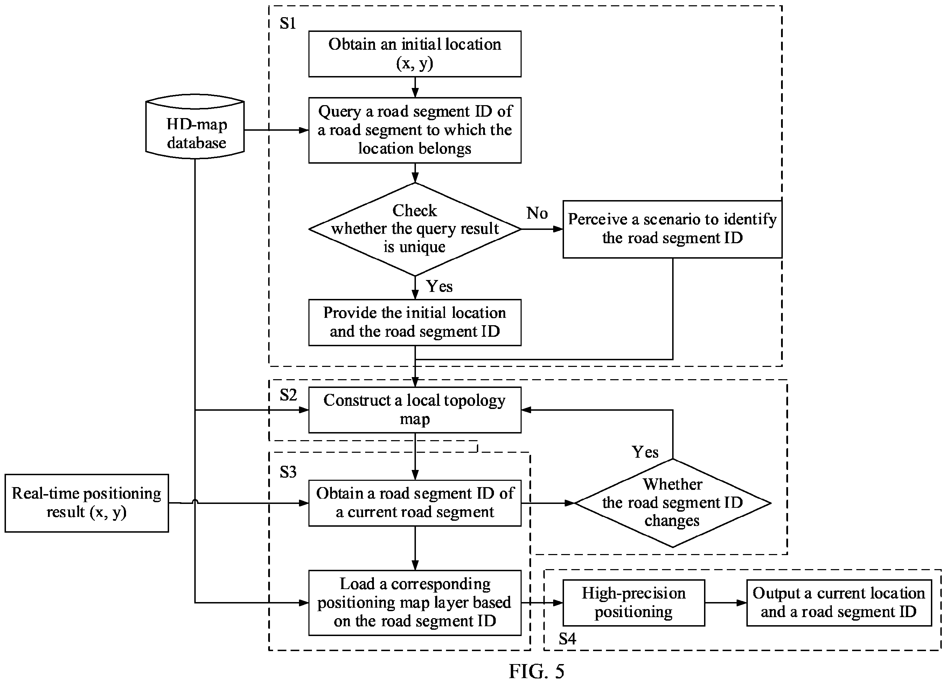

FIG. 5 is a schematic diagram of an embodiment of a positioning method according to an embodiment of this application.

A database of a positioning apparatus of a vehicle includes a high-definition map (HD-map) and a positioning map layer. A specific positioning process of the positioning apparatus is as follows:
S1: Obtain an initial two-dimensional location (x, y), and query, based on an HD-map database, a road segment ID of a road segment to which the location belongs. If a query result is unique, it indicates that the location does not belong to a spatially overlapping region, the initial location and the corresponding road segment ID may be directly provided. If the query result is not unique, the location is in the spatially overlapping region, and the positioning apparatus may determine a current road segment and obtain a road segment ID by using another method, for example, in a manner in which a sensor is used to perceive identification of a scenario around the road segment.
S2: The positioning apparatus constructs a local topology map based on the road segment ID obtained in step S1, saves the road segment ID to the local topology map (which may also be referred to as a local topology data table), and saves, to the local topology data table based on road segment information stored in a high-precision map, road segment IDs of all road segments adjacent to the road segment corresponding to the road segment ID.
S3: The positioning apparatus obtains a real-time positioning result (x, y) based on a GNSS signal, and obtains the road segment ID of the current road segment by using the local topology map. For a specific implementation, refer to step 305 in the embodiment corresponding to FIG. 3. Details are not described herein again. It may be understood that, when positioning is performed based on the GNSS signal, positioning precision is relatively low, and positioning precision is susceptible to impact from an ambient environment. Generally, precision of positioning performed in an empty and unshielded region based on the GNSS signal is at a meter level, and precision of positioning performed in a shielded case is even worse. In this embodiment of this application, for a scenario that requires high-precision positioning, the positioning apparatus may further store positioning map layer data in a database in advance, and store a road segment ID and a linked positioning map layer in road segment information in the high-precision map. In this case, the high-precision map is queried based on the road segment ID, so that a positioning map layer corresponding to the current road segment may be determined and loaded to perform high-precision positioning at a next step, and in this way, positioning precision over a decimeter level can be implemented, for example, a decimeter level or a centimeter level. In addition, the positioning apparatus may further determine whether the road segment ID changes, that is, whether a road segment in which the vehicle is located changes. If the road segment ID changes, the positioning apparatus updates the local topology data table, and if the road segment ID remains unchanged, the positioning apparatus performs another operation, for example, keeps the local topology data table unchanged.
S4: The positioning apparatus may further perform high-precision positioning based on the loaded positioning map layer and sensor data obtained in real time, to output a current positioned location and a road segment ID of the road segment in which the vehicle is located.

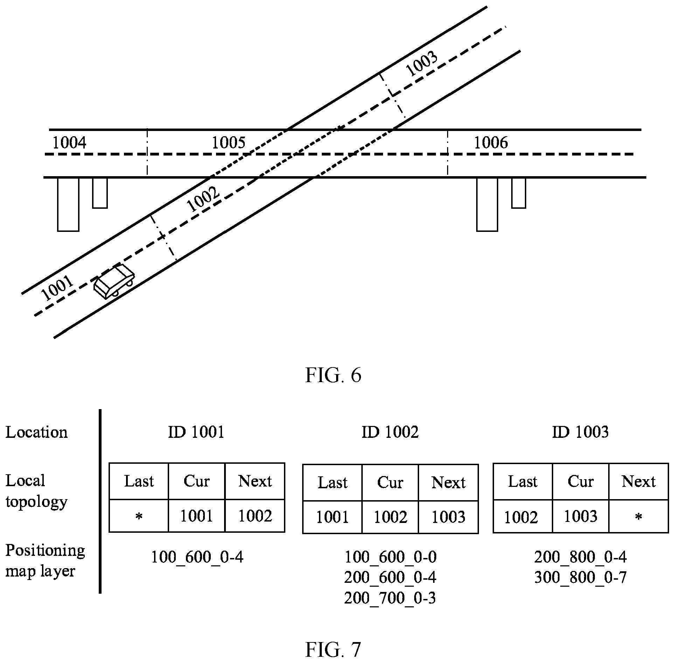

FIG. 6 is a schematic diagram of an embodiment of a positioning method in a spatially overlapping scenario according to an embodiment of this application.

This scenario is as follows: There is an overlapping region between an elevated bridge and a ground-level road; in other words, there are an upper layer and a lower layer at a location with same latitude and longitude, and a vehicle travels from a location on a lower left side of the ground-level road to an upper right side.

Road segment information of a road is pre-stored in a high-precision map. Different road segments have different road segment IDs. As shown in FIG. 6, start and end points of the road segment are a road intersection, the ground-level road includes a road segment 1001 (a road segment ID is 1001), a road segment 1002, and a road segment 1003, and an elevated road includes a road segment 1004, a road segment 1005, and a road segment 1006. The road segment 1002 and the road segment 1005 are road segments that overlap in space.

The high-precision map further stores a link parameter of a road segment, and a link value is an identifier of a positioning map layer. For example, a link value corresponding to the ID 1001 is "100_600_0-4". A positioning map layer linked with the road segment 1001 may be determined based on the link value. Optionally, in actual application, because a length of a road segment is different, one road segment may correspond to one or more positioning map layers, and one positioning map layer includes a part of environment information of one road segment. In this case, one road segment ID has a plurality of link values. For example, links of the road segment 1002 are "100_600_0-0", "200_600_0-4", and "200_700_0-3", in other words, the road segment 1002 corresponds to three local positioning map layers, and the three positioning map layers each include some environment information of the road segment 1002.

When an autonomous driving vehicle travels from a left side of the ground-level road and reaches the road segment 1003 after passing through the elevated bridge, the autonomous driving vehicle continuously queries a current road based on a current location. FIG. 7 is a schematic diagram of a local topology map in a vehicle traveling process in this embodiment of this application.

Under the elevated bridge, it is found that current road segment IDs are 1002 and 1005. It can be determined, based on the constructed local topology map, that a road segment ID of a road segment to which the current location belongs is 1002.

Further, after obtaining information about the road segment ID, the positioning apparatus determines a positioning map layer corresponding to a current location of a target.

Optionally, the positioning map layer is loaded based on a linking relationship between a road segment ID and a positioning map layer. For example, positioning map layers corresponding to the road segment 1002 are "100_600_0-0", "200_600_0-4", and "200_700_0-3". Because the road segment 1002 corresponds to a plurality of positioning map layers, the positioning apparatus may separately perform matching with the three positioning map layers "100_600_0-0", "200_600_0-4", and "200_700_0-3" based on real-time measurement data of a sensor, to determine that the positioning map layer corresponding to the current location is "100_600_0-0".

Optionally, the positioning apparatus may directly determine, based on the current location (x, y), that "100_600_0-0" in the three positioning map layers linked with the road segment 1002 is a current positioning map layer.

The positioning apparatus loads the positioning map layer corresponding to the current location of the target, and performs matching based on the real-time measurement data of the sensor, to determine a current high-precision real-time location (x', y') of the target. A method for performing high-precision positioning based on the positioning map layer is a conventional technology. Details are not described herein.

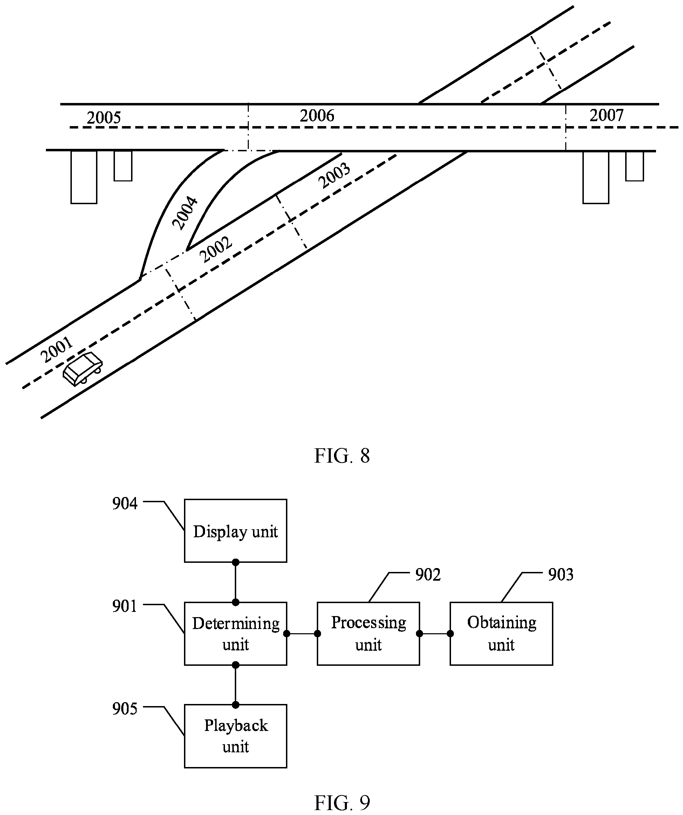

FIG. 8 is a schematic diagram of another embodiment of a positioning method in a spatially overlapping scenario according to an embodiment of this application.

This scenario is as follows: There is an overlapping region between a road segment 2006 (a road segment ID is 2006) on an elevated bridge and a road segment 2003 on a ground-level road; in other words, there are an upper layer and a lower layer at a location with same latitude and longitude. The ground-level road is accessible to the elevated bridge through a ramp road segment 2004. As shown in FIG. 6, start and end points of a road segment are a road intersection. An autonomous driving vehicle travels from a left side of the ground-level road to a right side of an elevated bridge road through a ramp.

When the vehicle travels in a road segment 2001, the vehicle changes a lane and travels to the ramp road segment 2004. After reaching the elevated bridge, the vehicle travels to a road segment 2007 after passing through a road segment 2006.

The autonomous driving vehicle continuously queries location information of a current road based on a current location, and maintains a local topology map. In the road segment 2001, "next road" in the local topology map includes a road segment 2002 and the road segment 2004. In the road segment 2004, "next road" in the local topology map is updated to the road segment 2006. In the road segment 2006, road segment IDs corresponding to a current location may be obtained based on positioned location information, and the road segment IDs include 2006 and 2003. Because "next road" in the local topology map is a road segment ID 2006 in a road segment list, and does not include the road segment ID 2003, it may be determined that a road segment in which the vehicle is currently located is the road segment 2006. After obtaining information about the road segment ID, the positioning apparatus determines a positioning map layer corresponding to a current location of a target, and performs precise positioning based on the positioning map layer. Details are not described herein again.

The positioning method provided in this application is described above, and a positioning apparatus for implementing the positioning method is described below. FIG. 9 is a schematic diagram of an embodiment of a positioning apparatus according to an embodiment of this application.

The positioning apparatus has a navigation function, and may be a vehicle-mounted apparatus with the navigation function, such as a vehicle-mounted navigator. Alternatively, the positioning apparatus may be a mobile terminal that has the navigation function, such as a mobile phone, a tablet computer, or a wearable device. A specific product form of the positioning apparatus is not limited herein.

The positioning apparatus includes:
a determining unit 901, configured to determine an identifier of a first road segment in which a target is located at a first moment; and
a processing unit 902, configured to construct a local topology map of the first moment based on map information, where the local topology map of the first moment includes an identifier of a road segment adjacent to the first road segment.

The determining unit 901 is further configured to obtain location information of the target at a second moment, where the second moment is a moment after the first moment in a time sequence.

The determining unit 901 is further configured to determine, based on the map information and the location information of the target at the second moment, identifiers of at least two road segments corresponding to the target at the second moment.

The determining unit 901 is further configured to determine, based on the local topology map of the first moment and the identifiers of the at least two road segments corresponding to the target at the second moment, an identifier of a road segment in which the target is located at the second moment.

Optionally, the map information includes identifiers of road segments and a connection relationship between road segments.

Optionally, the apparatus further includes: an obtaining unit 903, configured to obtain a navigation satellite system signal of the target at an initial moment. The determining unit 901 is further configured to determine location information of the target at the initial moment based on the navigation satellite system signal. The determining unit 901 is further configured to determine, based on the map information and the location information of the target at the initial moment, an identifier of a road segment in which the target is located at the initial moment.

Optionally, the apparatus further includes: an obtaining unit 903, configured to obtain a navigation satellite system signal of the target at an initial moment. The determining unit 901 is further configured to determine location information of the target at the initial moment based on the navigation satellite system signal. The determining unit 901 is further configured to determine, based on the map information, that the location information of the target at the initial moment corresponds to identifiers of at least two road segments. The determining unit 901 is further configured to determine, based on laser point cloud data at the initial moment by performing matching with laser point cloud data in a pre-constructed positioning map layer, an identifier of a road segment in which the target is located at the initial moment.

Optionally, the second moment is determined based on the first moment and a preset positioning frequency.

Optionally, the processing unit 902 is further configured to construct a local topology map of the second moment based on an identifier of a second road segment and the map information, where the local topology map of the second moment includes an identifier of a road segment adjacent to the second road segment.

Optionally, the determining unit 901 is further configured to: determine location information of the target at a third moment, where the third moment is a moment after the second moment in the time sequence; determine, based on the map information and the location information of the target at the third moment, identifiers of at least two road segments corresponding to the target at the third moment; and determine, based on the local topology map of the second moment and the identifiers of the at least two road segments, the identifier of the road segment in which the target is located at the second moment.

Optionally, the determining unit 901 is further configured to: determine, based on the map information, an identifier of a positioning map layer linked with the identifier of the second road segment, where the map information includes an identifier of a positioning map layer linked with an identifier of a road segment; determine, based on the identifier of the positioning map layer, the positioning map layer linked with the identifier of the second road segment; and determine accurate location information of the target at the second moment based on the positioning map layer linked with the identifier of the second road segment, where precision of the accurate location information of the target at the second moment is higher than that of the location information of the target at the second moment.

Optionally, the apparatus further includes: a display unit 904, configured to display information about the second road segment on a display interface of a mobile phone; and/or a playback unit 905, configured to broadcast the information about the second road segment through speech by using the mobile phone.

Optionally, the apparatus further includes: a display unit 904, configured to display information about the second road segment on a display interface of a vehicle-mounted terminal; and/or a playback unit 905, configured to broadcast the information about the second road segment through speech by using the vehicle-mounted terminal.

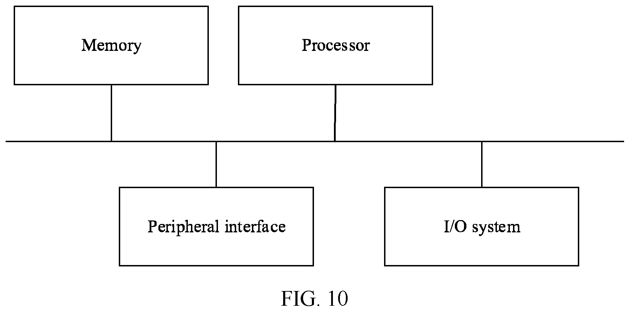

FIG. 10 is a schematic diagram of another embodiment of a positioning apparatus according to an embodiment of this application.

The positioning method in embodiments of this application may be implemented by using program code in a memory. For specific deployment, refer to FIG. 10. The positioning apparatus includes a processor, a memory, a peripheral interface, and an input/output (I/O) subsystem, and the processor, the memory, the peripheral interface, and the input/output (I/O) subsystem communicate with each other by using a communication bus or a signal cable.

The memory is configured to store computer program instructions, may be accessed by the processor, the peripheral interface, and the input/output (I/O) subsystem, and may include a high-speed random access memory or a non-volatile memory such as a flash memory, a disk, or another solid-state storage device. An HD-map may be pre-stored in the memory, or may be downloaded from a network end or the cloud through an interface and stored in the memory.

The processor is configured to invoke the computer program instructions in the memory to perform an elevation positioning function for an autonomous driving vehicle.

The foregoing method embodiments of this application may be applied to the processor, or the processor implements the steps in the foregoing method embodiments. The processor may be an integrated circuit chip and has a signal processing capability. In an implementation process, steps in the foregoing method embodiments may be implemented by using a hardware integrated logic circuit in the processor, or by using instructions in a form of software. The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field-programmable gate array (field programmable gate array, FPGA) or another programmable logic device, a discrete gate or a transistor logic device, or a discrete hardware component. It may implement or perform the methods, the steps, and logical block diagrams that are disclosed in this application. The general-purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. The software module may be located in a storage medium mature in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. Although only one processor is shown in the figure, the apparatus may include a plurality of processors, or the processor includes a plurality of processing units. Specifically, the processor may be a single-core (single-CPU) processor, or may be a multi-core (multi-CPU) processor.

The memory is configured to store a computer instruction executed by the processor. The memory may be a storage circuit, or may be a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. The memory may be independent of the processor, or may be a storage unit in the processor. This is not limited herein. Although only one memory is shown in the figure, the apparatus may alternatively include a plurality of memories, or the memory includes a plurality of storage units.

A transceiver is configured to implement content interaction between the processor and another unit or network element. Specifically, the transceiver may be a communication interface of the apparatus, may be a transceiver circuit or a communication unit, or may be a transceiver. The transceiver may alternatively be a communication interface or a transceiver circuit of the processor. In a possible implementation, the transceiver may be a transceiver chip. The transceiver may further include a sending unit and/or a receiving unit. In a possible implementation, the transceiver may include at least one communication interface. In another possible implementation, the transceiver may alternatively be a unit implemented in a form of software. In embodiments of this application, the processor may interact with another unit or network element by using the transceiver. For example, the processor obtains or receives content from the another network element by using the transceiver. If the processor and the transceiver are two physically separated components, the processor may exchange content with another unit of the apparatus without using the transceiver.

In a possible implementation, the processor, the memory, and the transceiver may be connected to each other by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In embodiments of this application, for ease of understanding, a plurality of examples are used for description. However, these examples are merely instances, and do not mean the best implementation for implementing this application.

Perspective of a computer program product and a storage medium:

All or some of the foregoing embodiments may be implemented by using software, hardware, firmware, or any combination thereof. When software is used for implementation, all or some of the foregoing embodiments may be implemented in a form of a computer program product.

The computer program product includes one or more computer instructions. When the computer executable instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk)), or the like.

The technical solutions provided in embodiment of this application are described in detail above. The principle and implementation of this application are described herein by using specific examples. The description about embodiments is merely provided to help understand the method and core ideas of this application. In addition, persons of ordinary skill in the art can make variations and modifications to this application in terms of the specific implementations and application scopes according to the ideas of this application. Therefore, the content of specification shall not be construed as a limit to this application.

## Claims

1. A positioning method, comprising:
determining an identifier of a first road segment in which a target is located at a first moment;
constructing a local topology map of the first moment based on map information, wherein the local topology map of the first moment comprises an identifier of a road segment adjacent to the first road segment;
obtaining location information of the target at a second moment, wherein the second moment is a moment after the first moment in a time sequence;
determining, based on the map information and the location information of the target at the second moment, identifiers of at least two road segments corresponding to the target at the second moment; and
determining, based on the local topology map of the first moment and the identifiers of the at least two road segments corresponding to the target at the second moment, an identifier of a road segment in which the target is located at the second moment.

2. The method according to claim 1, wherein the map information comprises identifiers of road segments and a connection relationship between road segments.

3. The method according to claim 1 or 2, wherein
the method further comprises:
obtaining a navigation satellite system signal of the target at an initial moment;
determining location information of the target at the initial moment based on the navigation satellite system signal; and
determining, based on the map information and the location information of the target at the initial moment, an identifier of a road segment in which the target is located at the initial moment.

4. The method according to claim 1 or 2, wherein the method further comprises:
obtaining a navigation satellite system signal of the target at an initial moment;
determining location information of the target at the initial moment based on the navigation satellite system signal;
determining, based on the map information, that the location information of the target at the initial moment corresponds to identifiers of at least two road segments; and
determining, based on laser point cloud data at the initial moment by performing matching with laser point cloud data in a pre-constructed positioning map, an identifier of a road segment in which the target is located at the initial moment.

5. The method according to any one of claims 1 to 4, wherein
the second moment is determined based on the first moment and a preset positioning frequency.

6. The method according to any one of claims 1 to 5, wherein the method further comprises:
constructing a local topology map of the second moment based on an identifier of the second road segment and the map information, wherein the local topology map of the second moment comprises an identifier of a road segment adjacent to the second road segment.

7. The method according to claim 6, wherein the method further comprises:
determining location information of the target at a third moment, wherein the third moment is a moment after the second moment in the time sequence;
determining, based on the map information and the location information of the target at the third moment, identifiers of at least two road segments corresponding to the target at the third moment; and
determining, based on the local topology map of the second moment and the identifiers of the at least two road segments, the identifier of the road segment in which the target is located at the second moment.

8. The method according to any one of claims 1 to 7, wherein the method further comprises:
determining, based on the map information, an identifier of a positioning map linked with the identifier of the second road segment, wherein the map information comprises an identifier of a positioning map linked with an identifier of a road segment;
determining, based on the identifier of the positioning map, the positioning map linked with the identifier of the second road segment; and
determining accurate location information of the target at the second moment based on the positioning map linked with the identifier of the second road segment, wherein precision of the accurate location information of the target at the second moment is higher than that of the location information of the target at the second moment.

9. The method according to any one of claims 1 to 8, wherein the method further comprises:
displaying information about the second road segment on a display interface of a mobile phone; and/or
broadcasting the information about the second road segment through speech by using the mobile phone.

10. The method according to any one of claims 1 to 8, wherein the method further comprises:
displaying information about the second road segment on a display interface of a vehicle-mounted terminal, and/or
broadcasting the information about the second road segment through speech by using the vehicle-mounted terminal.

11. A positioning apparatus, comprising:
a determining unit, configured to determine an identifier of a first road segment in which a target is located at a first moment; and
a processing unit, configured to construct a local topology map of the first moment based on map information, wherein the local topology map of the first moment comprises an identifier of a road segment adjacent to the first road segment;
the determining unit is further configured to obtain location information of the target at a second moment, wherein the second moment is a moment after the first moment in a time sequence;
the determining unit is further configured to determine, based on the map information and the location information of the target at the second moment, identifiers of at least two road segments corresponding to the target at the second moment; and
the determining unit is further configured to determine, based on the local topology map of the first moment and the identifiers of the at least two road segments corresponding to the target at the second moment, an identifier of a road segment in which the target is located at the second moment.

12. The apparatus according to claim 11, wherein the map information comprises identifiers of road segments and a connection relationship between road segments.

13. The apparatus according to claim 11 or 12, wherein the apparatus further comprises:
an obtaining unit, configured to obtain a navigation satellite system signal of the target at an initial moment, wherein
the determining unit is further configured to determine location information of the target at the initial moment based on the navigation satellite system signal; and
the determining unit is further configured to determine, based on the map information and the location information of the target at the initial moment, an identifier of a road segment in which the target is located at the initial moment.

14. The apparatus according to claim 11 or 12, wherein the apparatus further comprises:
an obtaining unit, configured to obtain a navigation satellite system signal of the target at an initial moment, wherein
the determining unit is further configured to determine location information of the target at the initial moment based on the navigation satellite system signal;
the determining unit is further configured to determine, based on the map information, that the location information of the target at the initial moment corresponds to identifiers of at least two road segments; and
the determining unit is further configured to determine, based on laser point cloud data at the initial moment by performing matching with laser point cloud data in a pre-constructed positioning map, an identifier of a road segment in which the target is located at the initial moment.

15. The apparatus according to any one of claims 11 to 14, wherein
the second moment is determined based on the first moment and a preset positioning frequency.

16. The apparatus according to any one of claims 11 to 15, wherein
the processing unit is further configured to construct a local topology map of the second moment based on an identifier of the second road segment and the map information, wherein the local topology map of the second moment comprises an identifier of a road segment adjacent to the second road segment.

17. The apparatus according to claim 16, wherein the determining unit is further configured to:
determine location information of the target at a third moment, wherein the third moment is a moment after the second moment in the time sequence;
determine, based on the map information and the location information of the target at the third moment, identifiers of at least two road segments corresponding to the target at the third moment; and
determine, based on the local topology map of the second moment and the identifiers of the at least two road segments, the identifier of the road segment in which the target is located at the second moment.

18. The apparatus according to any one of claims 11 to 17, wherein the determining unit is further configured to:
determine, based on the map information, an identifier of a positioning map linked with the identifier of the second road segment, wherein the map information comprises an identifier of a positioning map linked with an identifier of a road segment;
determine, based on the identifier of the positioning map, the positioning map linked with the identifier of the second road segment; and
determine accurate location information of the target at the second moment based on the positioning map linked with the identifier of the second road segment, wherein precision of the accurate location information of the target at the second moment is higher than that of the location information of the target at the second moment.

19. The apparatus according to any one of claims 11 to 18, wherein the apparatus further comprises:
a display unit, configured to display information about the second road segment on a display interface of a mobile phone; and/or
a play unit, configured to broadcast the information about the second road segment through speech by using the mobile phone.

20. The apparatus according to any one of claims 11 to 18, wherein the apparatus further comprises:
a display unit, configured to display information about the second road segment on a display interface of a vehicle-mounted terminal; and/or
a play unit, configured to broadcast the information about the second road segment through speech by using the vehicle-mounted terminal.

21. A positioning apparatus, comprising a processor and a memory, wherein the processor and the memory are connected to each other, the memory is configured to store a computer program, the computer program comprises program instructions, and the processor is configured to invoke the program instructions, to perform the method according to any one of claims 1 to 10.

22. A computer program product comprising instructions, wherein when the computer program product runs on a computer, the computer is enabled to perform the method according to any one of claims 1 to 10.

23. A computer-readable storage medium, comprising instructions, wherein when the instructions are run on a computer, the computer is enabled to perform the method according to any one of claims 1 to 10.
